# EUROPÄISCHE PATENTSCHRIFT

(11) **EP 4 021 756 B1**
(45) Veröffentlichungstag und Bekanntmachung des Hinweises auf die Patenterteilung: **01.10.2025**
(21) Anmeldenummer: 20761834.9
(22) Anmeldetag: 26.08.2020
(51) Int. Cl.: B60L 53/14, B60L 53/30, B60L 53/10, H02J 7/02, B60L 53/22, H02J 7/00

(54) **LADESYSTEM ZUM GLEICHSTROMLADEN DER TRAKTIONSBATTERIE EINES ELEKTRISCH ANGETRIEBENEN KRAFTFAHRZEUGS**
CHARGING SYSTEM FOR DC CHARGING OF THE TRACTION BATTERY OF AN ELECTRICALLY DRIVEN VEHICLE
SYSTÈME DE CHARGE POUR CHARGER À COURANT CONTINU LA BATTERIE DE TRACTION D'UN VÉHICULE ÉLECTRIQUE

(30) Priorität: 28.08.2019 DE 102019006065
(43) Veröffentlichungstag der Anmeldung: 06.07.2022
(73) Patentinhaber: KOSTAL Automobil Elektrik GmbH & Co. KG, 58513 Lüdenscheid (DE)
(72) Erfinder: LENKENHOFF, Christian, 58332 Schwelm (DE); WESSEL, Sven, 42107 Wuppertal (DE)
(86) Internationale Anmeldenummer: PCT/EP2020/073856
(87) Internationale Veröffentlichungsnummer: WO 2021/037914

(56) Entgegenhaltungen:
- EP-A1- 3 048 696
- WO-A1-2013/182825
- WO-A1-2016/092151
- WO-A2-2012/128626
- DE-B4- 102015 200 960
- US-A1- 2004 189 251
- US-A1- 2013 049 689
- US-A1- 2013 134 935
- US-A1- 2013 257 146
- US-A1- 2018 281 609

## Beschreibung

Die Erfindung betrifft ein Ladesystem zum Gleichstromladen der Traktionsbatterie eines elektrisch angetriebenen Kraftfahrzeugs, umfassend eine ortsfeste Ladestation, die mit einem dreiphasigen Wechselspannungs- oder Drehstrom-Versorgungsnetz verbunden ist, mit zumindest zwei AC/DC-Wandlern wobei ein AC/DC-Wandler als Teil eines aus der Ladestation entnehmbaren, portablen Moduls ausgeführt ist, welches Modul mit einem von der Ladestation trennbaren Gehäuse versehen ist, in dem weitere elektronische Komponenten vorhanden sind, die dieses zu einem eigenständigen, von der ortsfesten Ladestation unabhängigen, einphasigen DC-Ladegerät ergänzen, welches eingangsseitig mit jeder 1-phasigen AC-Stromversorgung verbunden werden kann, und wobei der in dem portablen Modul erzeugte Gleichstrom mit dem intern erzeugten Gleichstrom zusammengeführt ist, so dass an einem DC-Ladekabel der ortsfesten Ladestation, welches mit dem Kraftfahrzeug verbunden wird, der gesamte erzeugte Gleichstrom zur Verfügung steht.

Unter dem Begriff eines elektrisch angetriebenen Kraftfahrzeugs sollen hier Fahrzeuge verstanden werden, die entweder ausschließlich oder zusätzlich durch Elektromotoren angetrieben werden und die zumindest optional eine elektrische Lademöglichkeit an einer externen Stromquelle vorsehen. Insbesondere sollen auch so genannte Plug-in-Hybrid-Fahrzeuge hier den Elektrofahrzeugen zugerechnet werden.

Beim leitungsgebundenen Laden von Elektrofahrzeugen haben sich das Wechselstromladen einerseits und das Gleichstromladen andererseits als mögliche Ladenmodi etabliert. Beim Wechselstromladen wird ein ein- oder mehrphasiger Wechselstrom über eine Leitung dem Elektrofahrzeug zugeführt. Ein in einem fahrzeugseitigen Ladegerät vorhandener AC/DC-Wandler erzeugt aus diesem Wechselstrom einen Gleichstrom, der der Traktionsbatterie zugeführt wird. Das vollständige Aufladen einer entladenen Traktionsbatterie dauert dabei üblicherweise mehrere Stunden.

Beim Gleichstromladen wird das Elektrofahrzeug an einer Ladestation mit einem Gleichstrom gespeist. Dabei kann die Traktionsbatterie direkt, das heißt üblicherweise über einen mechanischen oder elektronischen Trennschalter, aber ohne dass fahrzeugseitige Wandlerschaltungen, für welche strenge Bauraum- und Gewichtsrestriktionen gelten, zum Einsatz kommen, mit der Ladestation verbunden werden. Hierdurch ist es möglich, beim Laden deutlich höhere Ströme als beim Wechselstromladen vorzusehen, wodurch der Ladevorgang vergleichsweise schnell ablaufen kann, da der ortsfeste Laderegler in Form einer Ladesäule oder einer Wallbox deutlich größer ausgelegt werden kann, als das fahrzeugseitige Ladegerät.

Ein Verzicht auf diese fahrzeugseitigen Wandlerschaltungen, als Bestandteile sogenannter "Onboard Charger" bietet zudem deutliche Kostenvorteile. Allerdings sind diese Fahrzeuge dann auch nur mit einer DC-Lademöglichkeit ausgestattet, und somit auf entsprechende DC-Ladesäulen angewiesen. Für den Fall dass ein derartiges Fahrzeug fernab einer geeigneten Ladeinfrastruktur bewegt wird, besteht aber Bedarf nach einer portablen Lademöglichkeit, mit der wiederum ein Laden des Fahrzeugs sowohl an öffentlichen AC-Ladesäulen als auch an der heimischen Steckdose möglich ist.

Die US 2013/0049689 A1 zeigt ein Ladesystem zum Laden der Traktionsbatterie eines elektrisch angetriebenen Kraftfahrzeugs, wobei das Ladesystem sowohl zum Gleichstromladen als auch zum Wechselstromladen ausgebildet ist. Das Ladesystem umfasst auch einen AC/DC-Wandler, der dazu eingerichtet ist, eine Speicherbatterie innerhalb einer mobilen Ladestation mit Strom aus dem Wechselstromnetz aufzuladen. Ein aus der Ladestation entnehmbares Modul ist dabei mit einem Gehäuse und mit elektronischen Komponenten versehen, die dieses zu einem eigenständigen einphasigen Ladegerät machen. Dieses Ladegerät ist jedoch allein zum Wechselstromladen geeignet. Das Fahrzeug benötigt hier also in jedem Falle weiterhin einen "Onboard Charger".

Die DE 10 2015 200 960 B4 zeigt ein Ladesystem gemäß dem Oberbegriff des Patentanspruchs 1. Dieses Ladesystem weist ein aus der ortsfesten Ladestation entnehmbares, portables Modul auf, welches mit einem von der Ladestation trennbaren Gehäuse versehen ist, und ein eigenständiges, von der ortsfesten Ladestation unabhängiges, DC-Ladegerät darstellt, welches eingangsseitig mit jeder 1-phasigen AC-Stromversorgung verbunden werden kann.

Die vorliegende Erfindung bildet ein solches Ladesystem zum Gleichstromladen der Traktionsbatterie eines elektrisch angetriebenen Kraftfahrzeugs dahin gehend weiter, dass durch eine geschickte Aufteilung von Komponenten zwischen ortsfestem und mobilem Teil eine besonders praktische und kostengünstige Ausführung möglich ist.

Dies gelingt erfindungsgemäß dadurch, dass für jede der drei Phasen ein eigener AC/DC-Wandler vorhanden ist, und dass der in dem portablen Modul aus einer ersten Phase erzeugte Gleichstrom mit dem intern aus den beiden anderen Phasen erzeugten Gleichstrom zusammengeführt ist.

Indem vorgesehen ist, dass der in dem portablen Modul aus der einen Phase erzeugte Gleichstrom mit dem intern aus den beiden anderen Phasen erzeugten Gleichstrom zusammengeführt ist, so dass an einem DC-Ladekabel der ortsfeste Ladestation, welches mit dem Fahrzeug verbunden wird, der aus allen drei Phasen erzeugte Gleichstrom zur Verfügung steht, können in der ortsfesten Ladestation die Bauteile für die Filterung, Gleichrichtung, Leistungsfaktorkorrektur, galvanischen Trennung und Stromregelung einer Phase eingespart werden.

Das portable Modul selbst stellt mit seinem integrierten AC/DC-Wandler unabhängig von der ortsfesten Ladestation ein eigenständiges DC-Ladegerät dar, welches eingangsseitig mit jeder 1-phasigen AC-Stromversorgung verbunden werden kann.

Weitere vorteilhafte Ausgestaltungen des erfindungsgemäßen Gegenstandes sind in den Unteransprüchen angegeben und werden anhand eines in der Zeichnung dargestellten Ausführungsbeispiels näher erläutert. Dabei zeigen
- Fig. 1: ein erfindungsgemäßes Ladesystem als sogenannte Wallbox mit Aufnahme für das portable Modul mit separatem und mit eingefügtem portablen Modul

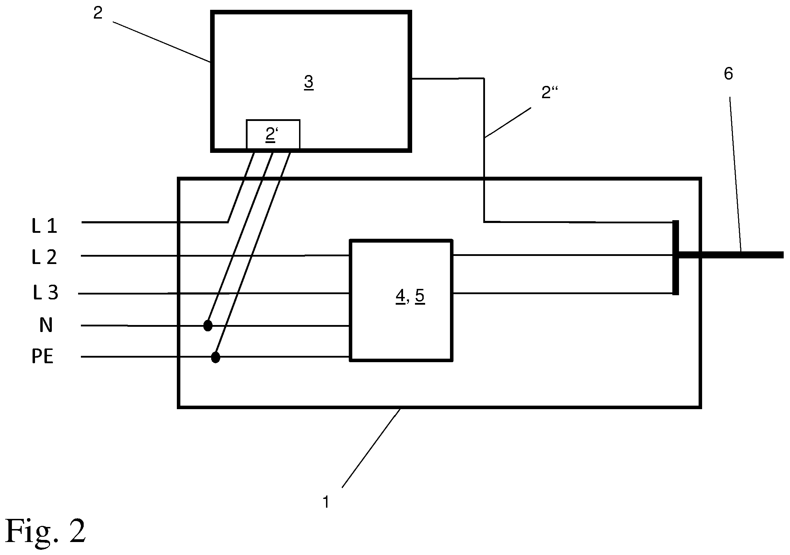

- Fig. 2:: eine schematische Darstellung der elektrischen Komponenten des erfindungsgemäßen Ladesystems

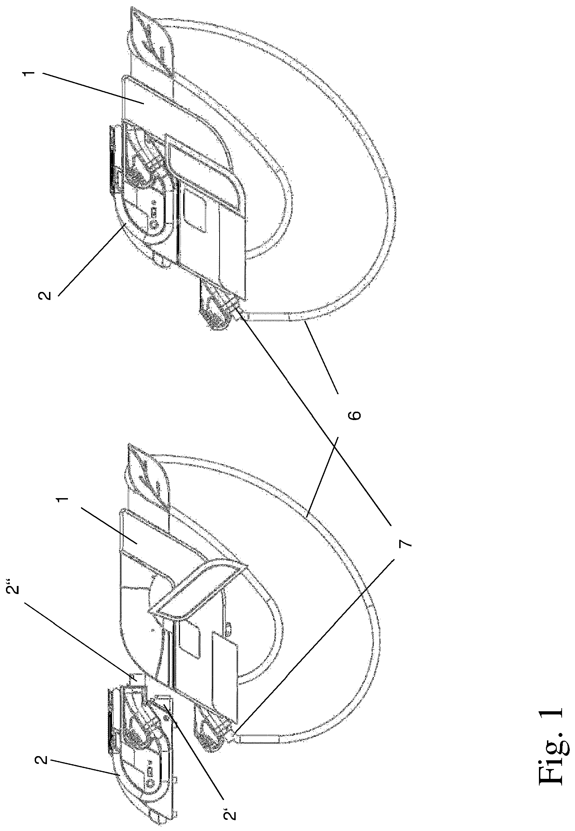

Wie in der Zeichnung dargestellt, umfasst die ortsfeste Ladestation 1 des erfindungsgemäßen Ladesystems eine Docking-Station mit einem stabilen Gehäuse, welches beispielweise an einer Wand befestigt wird. Elektrisch wird diese Docking Station der ortsfesten Ladestation 1 fest mit einem dreiphasigen Stromanschluss verbunden. Die Docking Station verfügt über ein langes Kabel 6 mit einem passenden Stecker 7 zum DC-Laden eines Elektrofahrzeuges sowie über eine Bedienmöglichkeit. Der Anschluss an das Stromnetz besteht aus drei Phasen L1, L2, L3, dem Neutralleiter N und der Schutzerde PE. Innerhalb der ortsfesten Ladestation 1 werden die Phasen L1, L2, L3 aufgeteilt, wobei der Wechselstrom aus zwei dieser Phasen L2, L3 in internen AC/DC-Wandlern zu Gleichstrom umgewandelt werden. Die erste Phase L1 wird an einen Stecker geleitet, der, sobald das portable Modul 2, wie in den beiden Abbildungen in Fig. 1 dargestellt, in die ortsfeste Ladestation 1 eingeklinkt wird, und dabei über die Schnittstelle 2' in eine AC-Eingangs-Steckdose des portablen Moduls 2 eingreift.

Somit ist das portable Modul 2 an eine einphasige AC-Spannungsversorgung L1, N, PE angeschlossen und kann seinerseits den Strom dieser einen Phase L1 mittels eines in dem portablen Modul 2 integrierten AC/DC-Wandlers 3 von AC zu DC umwandeln. Über einen DC-Ausgangsstecker des portablen Moduls 2 wird dieser DC-Strom über die trennbare Verbindung 2" wieder in die ortsfeste Ladestation 1 geführt. Dort wird der aus dieser einen Phase L1 erzeugte Gleichstrom mit dem intern aus den beiden anderen Phasen L2, L3 erzeugten Gleichstrom zusammengeführt, so dass am dicker ausgeführten DC-Ladekabel 6 der Docking-Station, welches mit dem Fahrzeug verbunden wird, der aus allen drei Phasen L1, L2, L3 erzeugte Gleichstrom zur Verfügung steht.

Unabhängig von der ortsfesten Ladestation 1 stellt das portable Modul 2 mit seinem integrierten AC/DC-Wandler 3 aber auch ein eigenständiges DC-Ladegerät dar, welches im Bedarfsfall im Fahrzeug mitgeführt werden kann. Es kann eingangsseitig mit jeder 1-phasigen AC-Stromversorgung, sei es die einer öffentlichen AC-Ladesäulen oder auch die der heimischen Steckdose, verbunden werden. Der DC-Ausgang des portablen Moduls 2 wird wiederum direkt mit dem Ladeeingang des Fahrzeugs verbunden. Es besteht beispielsweise auch die Möglichkeit z. B. im Kofferraum des Fahrzeugs einen festen Steckplatz für das portable Modul 2 vorzusehen, an dem dieses einerseits sicher transportiert werden kann, und andererseits elektrisch schon dauerhaft zwischen einem AC-Eingang des Fahrzeugs und einem DC-Eingang geschaltet ist, so dass zum Laden lediglich von außen die Verbindung zu der AC-Eingangsseite des Fahrzeuges hergestellt werden muss.

Das erfindungsgemäße Ladesystem ermöglicht es dem Benutzer, je nachdem wie das Fahrzeug verwendet wird, zu entscheiden, ob er das portable Modul 2 im Fahrzeug mitführt, um auch unabhängig von der Erreichbarkeit einer geeigneten ortsfesten DC-Ladestation ein Aufladen der Traktionsbatterie vornehmen zu können, oder ob er, etwa wenn nur kurze Strecken mit dem Fahrzeug zurückgelegt werden, zur Einsparung von zusätzlichem Gewicht und zur Vergrößerung des verfügbaren Stauraums darauf verzichtet und von der gesteigerten Ladeleistung der kombinierten Wallbox profitiert.

## Patentansprüche

1. Ladesystem zum Gleichstromladen der Traktionsbatterie eines elektrisch angetriebenen Kraftfahrzeugs, umfassend eine ortsfeste Ladestation (1), die mit einem dreiphasigen Wechselspannungs- oder Drehstrom-Versorgungsnetz (L1, L2, L3, N, PE) verbunden ist, mit zumindest zwei AC/DC-Wandlern (3, 4, 5) wobei ein AC/DC-Wandler (3) als Teil eines aus der Ladestation (1) entnehmbaren, portablen Moduls (2) ausgeführt ist, welches Modul (2) mit einem von der Ladestation (1) trennbaren Gehäuse versehen ist, in dem weitere elektronische Komponenten vorhanden sind, die dieses zu einem eigenständigen, von der ortsfesten Ladestation unabhängigen, einphasigen DC-Ladegerät ergänzen, welches eingangsseitig mit jeder 1-phasigen AC-Stromversorgung verbunden werden kann, und wobei der in dem portablen Modul (2) erzeugte Gleichstrom mit dem intern erzeugten Gleichstrom zusammengeführt ist, so dass an einem DC-Ladekabel (6) der ortsfesten Ladestation (1), welches mit dem Kraftfahrzeug verbunden wird, der gesamte erzeugte Gleichstrom zur Verfügung steht, **dadurch gekennzeichnet, dass** für jede der drei Phasen (L1, L2, L3) ein eigener AC/DC-Wandler vorhanden ist, und dass der in dem portablen Modul (2) aus einer ersten Phase (L1) erzeugte Gleichstrom mit dem intern aus den beiden anderen Phasen (L2, L3) erzeugten Gleichstrom zusammengeführt ist .

## Claims

1. Charging system for DC charging the traction battery of an electrically powered motor vehicle, comprising a stationary charging station (1) which is connected to a three-phase alternating voltage or three-phase current supply network (L1, L2, L3, N, PE), with at least two AC/DC converters (3, 4, 5), wherein one AC/DC converter (3) is designed as part of a portable module (2) that can be removed from the charging station (1), which module (2) is provided with a housing that can be separated from the charging station (1), in which further electronic components are provided which supplement it to form a stand-alone, single-phase DC charger independent of the stationary charging station, which can be connected on the input side to any single-phase AC power supply, and wherein the direct current generated in the portable module (2) is combined with the internally generated direct current so that the entire direct current generated is available at a DC charging cable (6) of the stationary charging station (1) which is connected to the motor vehicle, **characterized in that**, that there is a separate AC/DC converter for each of the three phases (L1, L2, L3), and that the direct current generated in the portable module (2) from a first phase (L1) is combined with the direct current generated internally from the other two phases (L2, L3).

## Revendications

1. Système de charge pour la charge en courant continu de la batterie de traction d'un véhicule automobile à propulsion électrique, comprenant une station de charge fixe (1) qui est reliée à un réseau d'alimentation triphasé à courant alternatif ou triphasé (L1, L2, L3, N, PE), avec au moins deux convertisseurs CA/CC (3, 4, 5), un convertisseur CA/CC (3) étant réalisé sous la forme d'un module portable (2) pouvant être retiré de la station de charge (1), lequel module (2) est muni d'un boîtier séparable de la station de charge (1), dans lequel autres composants électroniques sont présents, qui le complètent pour former un chargeur à courant continu monophasé autonome, indépendant de la station de charge fixe, qui peut être connecté côté entrée à n'importe quelle alimentation en courant alternatif monophasé, et dans lequel le courant continu produit dans le module portable (2) est combiné avec le courant continu produit en interne de telle sorte que tout le courant continu produit est disponible sur un câble de charge CC (6) de la station de charge fixe (1) qui est relié au véhicule automobile, **caractérisé en ce que** qu'il existe un convertisseur CA/CC distinct pour chacune des trois phases (L1, L2, L3) et que le courant continu généré dans le module portable (2) à partir d'une première phase (L1) est combiné avec le courant continu généré en interne à partir des deux autres phases (L2, L3).
